# EUROPÄISCHE PATENTSCHRIFT

(11) **EP 2 242 659 B1**
(45) Veröffentlichungstag und Bekanntmachung des Hinweises auf die Patenterteilung: **04.07.2012**
(21) Anmeldenummer: 08871584.2
(22) Anmeldetag: 22.11.2008
(51) Int. Cl.: B60C 23/04

(54) **REIFENDRUCKKONTROLLSYSTEM**
TIRE PRESSURE CONTROL SYSTEM
SYSTÈME DE VÉRIFICATION DE LA PRESSION DE PNEUMATIQUES

(30) Priorität: 24.01.2008 DE 102008005715
(43) Veröffentlichungstag der Anmeldung: 27.10.2010
(73) Patentinhaber: Huf Hülsbeck & Fürst GmbH & Co. KG, 42551 Velbert (DE)
(72) Erfinder: ARNOLD, Sven, 76316 Malsch (DE); MAIER, Uli, 74336 Brackenheim-Hausen (DE); LUPPOLD, Michael, E., 76706 Dettenheim-Lie (DE)
(74) Vertreter: Twelmeier Mommer & Partner
(86) Internationale Anmeldenummer: PCT/EP2008/009921
(87) Internationale Veröffentlichungsnummer: WO 2009/092414

(56) Entgegenhaltungen:
- EP-A- 0 751 017
- US-B1- 7 040 155

## Beschreibung

Die Erfindung betrifft ein Reifendruckkontrollsystem mit den im Oberbegriff des Anspruchs 1 angegebenen Merkmalen, wie es aus der EP 0 751 017 B1 bekannt ist.

Zu einem derartigen Reifendruckkontrollsystem gehört eine Radelektronik, die in einem Gehäuse ein Druckmessgerät und eine Sendeeinrichtung enthält. Das Gehäuse der Radelektronik wird an dem Reifenventil eines luftbereiften Rades befestigt, so dass zwei an der Unterseite des Gehäuses angeordnete Fußelemente auf dem Felgenbett aufsitzen. An seiner Rückseite hat das Gehäuse der Radelektronik eine Auflagefläche mit einem Langloch, die im montierten Zustand auf dem Ventilfuß des Reifenventils sitzt, so dass das Reifenventil durch das Langloch hindurchragt.

Bei dem aus der EP 0 751 017 B1 bekannten Reifendruckkontrollsystem ist die Auflagefläche als eine Kaverne ausgebildet, die im montierten Zustand auf einem gerundeten Ventilfuß sitzt. Bei der Montage kann die Radelektronik auf dem Ventilfuß in Richtung des Langlochs verschwenkt werden, so dass die Radelektronik unabhängig von dem Felgenbettniveau, d.h. der Lage der Ventilbohrung relativ zu dem Felgenbett, im montierten Zustand stets mit ihren Fußelementen auf dem Felgenbett aufsitzen kann. Das bekannte Reifendruckkontrollsystem ermöglicht auf diese Weise eine Anpassung an die geometrischen Verhältnisse einer gegebenen Felge. Dies ist wichtig, da unterschiedliche geformte Felgen gebräuchlich sind und die Radelektronik mit dem dazugehörenden Reifenventil eines Reifendruckkontrollsystems möglichst universell verwendbar sein sollte.

Die Fertigung eines Radelektronikgehäuses mit einer Kaverne und einem dazu passenden Ventilfuß ist jedoch aufwendig.

Aus der US 7040155 B1 ist eine Radelektronik bekannt, die mit einem exzentrischen Verbindungsstück formschlüssig an einem Ventilfuß befestigt wird. Die Radelektronik hat ein einziges Fußelement, das mittig angeordnet ist. Eine Anpassung an das Niveau des Felgenbettes geschieht durch eine Dreh- und Verschiebebewegung bis die Radelektronik mit ihrem Fußelement auf dem Felgenbett aufsitzt.

Aufgabe der Erfindung ist es deshalb, einen Weg aufzuzeigen, wie mit geringerem Aufwand ein Reifendruckkontrollsystem geschaffen werden kann, das für unterschiedliche Felgengeometrien verwendet werden kann und eine stabile Auflage auf dem Felgenbett ermöglicht.

Diese Aufgabe wird durch ein Reifendruckkontrollsystem mit den im Anspruch 1 angegebenen Merkmalen sowie eine für ein derartiges Reifenddruckkontrollsystem geeignete Radelektronik gemäß Anspruch 13 gelöst. Vorteilhafte Weiterbildungen der Erfindung sind Gegenstand der Unteransprüche.

Bei einem erfindungsgemäßen Reifendruckkontrollsystem kann eine Anpassung an eine gegebene Felgengeometrie während der Montage durch eine lineare Verschiebung der Radelektronik auf dem Ventilfuß vorgenommen werden. Unabhängig von dem Felgenbettniveau einer gegebenen Felge kann so erreicht werden, dass das Gehäuse der Radelektronik mit beiden Fußelementen auf dem Felgenbett aufsitzt. Ein erfindungsgemäßes Reifendruckkontrollsystem ermöglicht deshalb mit geringem Aufwand bei allen gängigen Fahrzeugrädern eine stabile Dreipunktlagerung der Radelektronik, nämlich auf dem Ventilfuß und den beiden Fußelementen. Bei Verwendung von länglichen Fußelementen, beispielsweise Rippen an den Längsseiten des Gehäuses kann sogar erreicht werden, dass die Radelektronik mit beiden Fußelementen linienförmig bzw. mit einer länglichen Fläche auf dem Felgenbett aufsitzt. Die Auflagefläche der Radelektronik ist bevorzugt flach ausgebildet, da dies am einfachsten zu fertigen ist. Für die erfindungsgemäß vorgesehene Verschiebbarkeit der Radelektronik in Richtung des Langlochs ist dies jedoch nicht erforderlich. Beispielsweise kann die Auflagefläche auch als Mantelfläche eines sich in Richtung des Langlochs erstreckenden Halbzylinders ausgebildet sein oder parallel zu dem Langloch verlaufende Rippen oder Nuten aufweisen. In entsprechender Weise ist eine Trägerfläche des Ventilfußes, auf der die Auflagefläche der Radelektronik beim Verschieben gleitet, bevorzugt flach ausgebildet.

Bevorzugt verläuft die Auflagefläche schräg zur Gehäuseunterseite. Die Auflagefläche kann dabei eben ausgebildet sein oder eine Struktur aufweisen, beispielsweise in Richtung des Langlochs verlaufende Rippen aufweisen.

Bevorzugt weist das Reifenventil eine Hohlschraube auf, die in dem Ventilfuß steckt und durch das Langloch hindurch ragt. Vor dem Anziehen der Hohlschraube lässt sich die Radelektronik auf dem Ventilfuß verschieben, um das Reifendruckkontrollsystem an ein gegebenes Felgenbettniveau anzupassen. Durch das Anziehen der Hohlschraube wird die Radelektronik gegen den Ventilfuß gepresst, so dass Reibungskräfte eine Verschiebung während der Fahrt verhindern.

Eine vorteilhafte Weiterbildung der Erfindung sieht vor, dass das Langloch in einem plattenförmigen Abschnitt der Gehäuserückseite angeordnet ist. Auf diese Weise lässt sich besonders einfach und kostengünstig eine Auflagefläche schaffen, die zur Montage eine lineare Verschiebung der Radelektronik auf dem Ventilfuß ermöglicht.

Weitere Einzelheiten und Vorteile der Erfindung werden an einem Ausführungsbeispiel unter Bezugnahme auf die beigefügten Zeichnungen erläutert:
- Figur 1:: ein Ausführungsbeispiel eines erfindungsgemäßen Reifendruckkontrollsystems an einer Felge; und
- Figur 2:: eine Schrägansicht des in Figur 1 dargestellten Reifendruckkontrollsystems.

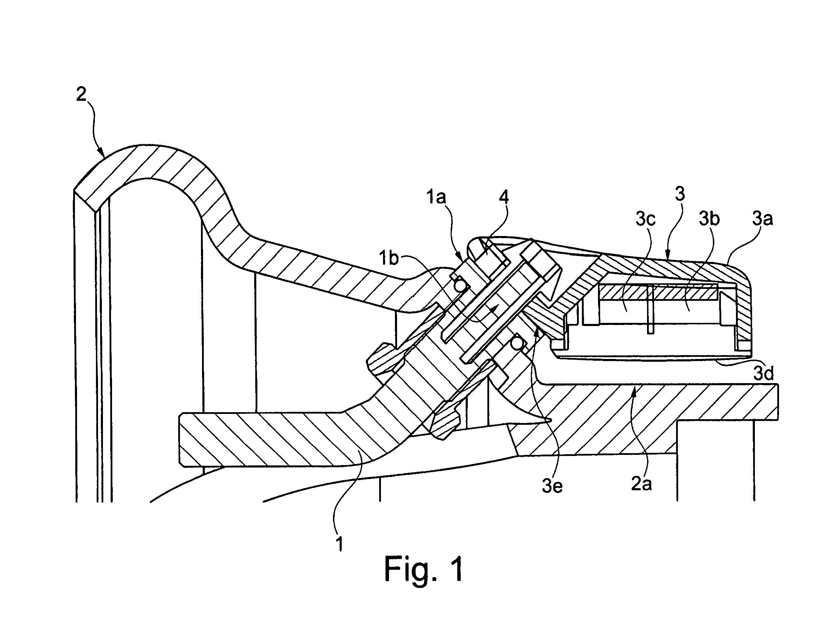

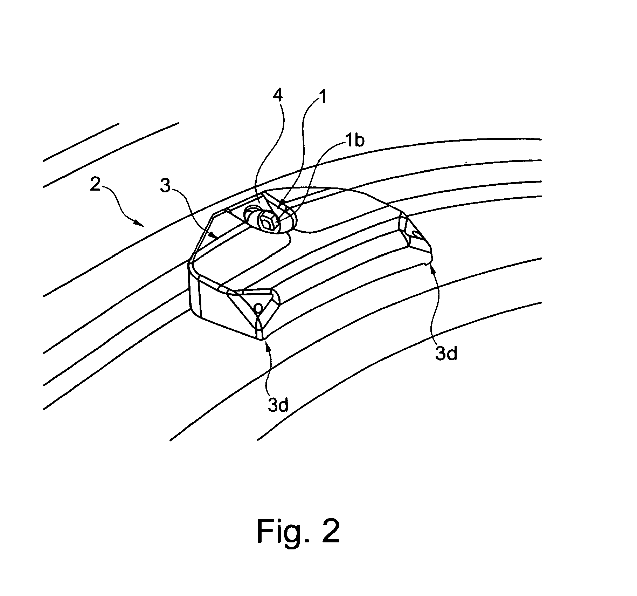

Figuren 1 und 2 zeigen ein Reifendruckkontrollsystem mit einem Reifenventil 1 an einer Felge 2 und einer an dem Ventil 1 befestigten Radelektronik 3. Die Radelektronik 3 hat ein Gehäuse 3a, in dem ein Druckmessgerät 3b und eine Sendeeinrichtung 3c angeordnet sind. Von der Radelektronik 3 gesendete Druckmesswerte können mit einer geeigneten Empfangseinrichtung empfangen und ausgewertet werden, so dass dem Fahrer eines Fahrzeugs ein Druckabfall signalisiert werden kann.

In Figur 1 und 2 sind das Reifenventil 1 und die Radelektronik 3 zusammen mit einer Felge 2 eines Luftreifens dargestellt. Das Gehäuse 3a hat an seiner Unterseite zwei als Rippen ausgebildete Fußelemente 3d zum Aufsetzen auf das Felgenbett 2a und an einer Rückseite eine Auflagefläche 3e, mit der es auf dem Ventilfuß 1 a des Reifenventils 1 sitzt. Die Auflagefläche 3e hat ein Langloch 4, durch das eine Hohlschraube 1b hindurch greift, die in dem Ventilfuß 1a steckt. Vor dem Anziehen der Hohlschraube 1 b ist die Auflagefläche 3e der Radelektronik 3 in Richtung des Langlochs 4 linear auf dem Ventilfuß 1a verschiebbar. Auf diese Weise kann das Reifendruckkontrollsystem an die geometrischen Verhältnisse eines gegebenen Rades angepasst werden, so dass sich stets eine stabile Dreipunktlagerung durch flächiges Aufsetzen der sich entlang gegenüberliegender Längsseiten des Gehäuses 3a erstreckenden Fußelemente 3d auf dem Felgenbett 2a erreichen lässt. Die Fußelemente 3d der Radelektronik liegen mit einem sich entlang der Längsseiten des Gehäuses 3a erstreckenden Abschnitt auf dem Felgenbett 2a auf. Dieser Abschnitt kann sich über die volle Länge der Fußelemente 2a oder nur einen Teil erstrecken.

Die Auflagefläche 3e an der Rückseite der Radelektronik 3 ist bei dem dargestellten Ausführungsbeispiel flach und verläuft schräg zur Gehäuseunterseite. Die Richtung, in der die Radelektronik 3 relativ zu dem Reifenventil 1 vor dem Anziehen der Hohlschraube 1b verschoben werden kann, ist in Figur 1 durch einen Doppelpfeil dargestellt.

Die Auflagefläche 3e der Radelektronik 3 sitzt auf einer Trägerfläche des Ventilfußes 1a, die bei dem dargestellten Ausführungsbeispiel ebenfalls flach ausgebildet ist und im montierten Zustand des Reifendruckkontrollsystems schräg zur Unterseite des Gehäuses 3 der Radelektronik 3a verläuft. Die Trägerfläche ist bevorzugt ebenso wie die an ihr anliegende Auflagefläche 3e eben. Eine oder beide dieser Flächen können jedoch auch strukturiert sein, beispielsweise durch Rippen, oder sogar nut- und federartig ineinander greifen, um ein Verdrehen der Radelektronik 3 zu verhindern. Für die lineare Verschiebbarkeit ist es bei strukturierten Flächen vorteilhaft, wenn eine gedachte Schnittlinie der Auflagefläche 3e bzw. der an ihr anliegenden Trägerfläche des Ventilfußes 1a mit einer gedachten Schnittebene, die parallel zu dem Langloch 4 verläuft, gerade ist. Die Struktur einer derartigen Auflagefläche ist translationssymmetrisch in Richtung des Langlochs 4, d. h. bei einer Abbildung eines Punktes der Fläche mittels einer geometrischen Verschiebungsoperation liegt das Bild des abgebildeten Punktes in der Auflagefläche.

Bei dem dargestellten Ausführungsbeispiel ist das Langloch 4 in einem plattenförmigen Abschnitt der Gehäuserückseite angeordnet. Bevorzugt ist dieser plattenförmige Abschnitt, der die Auflagefläche 3e bildet, mittig an der Gehäuserückseite angeordnet.

Eine vorteilhafte Weiterbildung der Erfindung sieht vor, einen Adapter zur Befestigung an der Unterseite des Gehäuses 3 vorzusehen und so bei Bedarf die beiden als Rippen ausgebildeten Fußelemente 3d nach unten zu verlängern, so dass auch bei sehr tief liegenden Felgenbetten ein Aufsetzen möglich ist. Reicht bei sehr tief liegenden Felgenbetten der durch die Länge des Langlochs 4 begrenzte maximale Verschiebeweg nicht aus, um ein Aufsetzen der Fußelemente 3d auf dem Felgenbett 2a zu ermöglichen, kann mit einem Adapter dennoch eine stabile Lagerung erreicht werden. Durch einen Adapter lässt sich ein eventuell fehlender Höhenausgleich überbrücken und eine stabile Lagerung auf dem Felgenbett 2a erreichen.

### Bezugszahlen

- 1: Reifenventil
- 1a: Ventilfuß
- 1b: Hohlschraube
- 2: Felge
- 2a: Felgenbett
- 3: Radelektronik
- 3a: Gehäuse
- 3b: Druckmessgerät
- 3c: Sendeeinrichtung
- 3d: Fußelemente
- 3e: Auflagefläche
- 4: Langloch

## Patentansprüche

1. Reifendruckkontrollsystem mit
einem Reifenventil (1) und mit
einer Radelektronik (3), die in einem Gehäuse (3a) ein Druckmessgerät (3b) und eine Sendeeinrichtung (3c) enthält,
wobei das Gehäuse (3a) an einer Unterseite zwei Fußelemente (3d) zum Aufsetzen auf das Felgenbett (2a) eines Rades und an einer Rückseite eine im montierten Zustand auf einem Ventilfuß (1 a) des Reifenventils (1) sitzenden Auflagefläche (3e) mit einem Langloch (4), durch das im montierten Zustand das Reifenventil (1) ragt, hat,
**dadurch gekennzeichnet, dass**
die Auflagefläche (3e) bei der Montage in Richtung des Langlochs (4) auf dem Ventilfuß (1 a) linear verschiebbar ist.

2. Reifendruckkontrollsystem nach Anspruch 1, **dadurch gekennzeichnet, dass** eine gedachte Schnittlinie der Auflagefläche (3e) mit einer parallel zu dem Langloch (4) verlaufenden gedachten Schnittebene gerade ist.

3. Reifendruckkontrollsystem nach einem der vorstehenden Ansprüche, **dadurch gekennzeichnet, dass** die Auflagefläche (3e) flach ist.

4. Reifendruckkontrollsystem nach einem der vorstehenden Ansprüche, **dadurch gekennzeichnet, dass** das Reifenventil (1) eine Hohlschraube (1b) aufweist, die in dem Ventilfuß (1a) steckt und durch das Langloch (4) hindurch ragt.

5. Reifendruckkontrollsystem nach einem der vorstehenden Ansprüche, **dadurch gekennzeichnet, dass** die Auflagefläche (3e) der Radelektronik (3) auf einer Trägerfläche des Ventilfußes (1a) sitzt, die im montierten Zustand schräg zur Unterseite des Gehäuses (3a) der Radelektronik (3) verläuft.

6. Reifendruckkontrollsystem nach Anspruch 5, **dadurch gekennzeichnet, dass** im montierten Zustand eine gedachte Schnittlinie der Trägerfläche mit einer parallel zu dem Langloch (4) verlaufenden gedachten Schnittebene gerade ist.

7. Reifendruckkontrollsystem nach Anspruch 5 oder 6, **dadurch gekennzeichnet, dass** die Trägerfläche eben ist.

8. Reifendruckkontrollsystem nach einem der vorstehenden Ansprüche, **dadurch gekennzeichnet, dass** die Fußelemente (3d) als Rippen ausgebildet sind.

9. Reifendruckkontrollsystem nach einem der vorstehenden Ansprüche, **dadurch gekennzeichnet, dass** sich die Fußelemente (3d) entlang gegenüberliegender Längsseiten des Gehäuses (3a) erstrecken.

10. Reifendruckkontrollsystem nach einem der vorstehenden Ansprüche, **dadurch gekennzeichnet, dass** das Langloch (4) in einem plattenförmigen Abschnitt der Gehäuserückseite angeordnet ist.

11. Reifendruckkontrollsystem nach einem der vorstehenden Ansprüche, **dadurch gekennzeichnet, dass** die Auflagefläche (3e) schräg zur Gehäuseunterseite verläuft.

12. Rad mit einem Felgenbett und einem Reifendruckkontrollsystem nach einem der vorstehenden Ansprüche, **dadurch gekennzeichnet, dass** die Fußelemente (3d) der Radelektronik mit einem sich entlang der Längsseiten des Gehäuses (3a) erstreckenden Abschnitt auf dem Felgenbett (2a) aufliegen.

13. Radelektronik mit einem Gehäuse (3a), in dem ein Druckmessgerät (3b) und eine Sendeeinrichtung (3c) angeordnet sind, wobei das Gehäuse (3a) an einer Unterseite zwei Fußelemente (3d) zum Aufsetzen auf das Felgenbett (2a) eines Rades und an einer Rückseite eine Auflagefläche (3e) mit einem Langloch (4) zum Aufsetzen auf den Ventilfuß (1a) eines Reifenventils (1) hat, **dadurch gekennzeichnet, dass** die Auflagefläche (3e) flach ist.

## Claims

1. A tire pressure control system, comprising a tire valve (1) and comprising
a wheel electronic system (3) which contains a pressure measuring device (3b) and a transmission device (3c) in a housing (3a),
wherein the housing (3a) has on a bottom side two foot elements (3d) to be placed onto the rim well (2a) of a wheel and has on a rear side a contact surface (3e) for seating on a valve base (1a) of the tire valve (1) in assembled condition, said contact surface (3e) having an elongated hole (4) through which the tire valve (1) projects in assembled condition,
**characterized in that**
the contact surface (3e) can be linearly displaced on the valve base (1a) in the direction of the elongated hole (4) during installation.

2. The tire pressure control system according to Claim 1, **characterized in that** an imaginary line of the contact surface (3e) is straight, said imaginary line intersecting an imaginary sectional plane extending in parallel to the elongated hole (4).

3. The tire pressure control system according to any one of the preceding claims, **characterized in that** the contact surface (3e) is flat.

4. The tire pressure control system according to any one of the preceding claims, **characterized in that** the tire valve (1) comprises a hollow screw (1b) which is inserted into the valve base (1a) and projects through the elongated hole (4).

5. The tire pressure control system according to any one of the preceding claims, **characterized in that** the contact surface (3e) of the wheel electronic system (3) is seated on a bearing surface of the valve base (1a), said bearing surface being inclined in relation to the bottom side of the housing (3a) of the wheel electronic system (3) in assembled condition.

6. The tire pressure control system according to Claim 5, **characterized in that** in assembled condition an imaginary intersecting line of the bearing surface and an imaginary sectional plane extending in parallel to the elongated hole (4) is straight.

7. The tire pressure control system according to Claim 5 or 6, **characterized in that** the bearing surface is planar.

8. The tire pressure control system according to any one of the preceding claims, **characterized in that** the foot elements (3d) are formed as ribs.

9. The tire pressure control system according to any one of the preceding claims, **characterized in that** the foot elements (3d) extend along opposite longitudinal sides of the housing (3a).

10. The tire pressure control system according to any one of the preceding claims, **characterized in that** the elongated hole (4) is arranged in a plate-shaped section of the rear side of the housing.

11. The tire pressure control system according to any one of the preceding claims, **characterized in that** the contact surface (3e) is inclined in relation to the bottom side of the housing.

12. A wheel comprising a rim well and a tire pressure control system according to any one of the preceding claims, **characterized in that** the foot elements (3d) of the wheel electronic system rest on the rim well (2a) with a section extending along the longitudinal sides of the housing (3a).

13. A wheel electronic system comprising a housing (3a), with a pressure measuring device (3b) and a transmission device (3c) being arranged in said housing (3a), wherein the housing (3a) has on its bottom side two foot elements (3d) to be placed onto the rim well (2a) of a wheel and has on a rear side a contact surface (3e) with an elongated hole (4) to be placed onto the valve base (1a) of a tire valve (1), **characterized in that** the contact surface (3e) is flat.

## Revendications

1. Système de contrôle de la pression d'un pneumatique, comprenant :
- une valve de pneumatique (1) ; et
- une électronique de roue (3) qui contient, dans un boîtier (3a), un appareil de mesure de pression (3b) et un dispositif émetteur (3c) ;
le boîtier (3a) possédant, sur une face inférieure, deux éléments formant embase (3d) pour la pose sur la base de la jante (2a) d'une roue et, sur une face postérieure, une surface d'appui (3e) qui repose dans l'état monté sur un pied de valve (1a) de la valve de pneumatique (1) et qui comporte un trou oblong (4) au travers duquel la valve de pneumatique (1) fait saillie dans l'état monté ;
**caractérisé par le fait que** :
la surface d'appui (3e) est apte, lors du montage, à être déplacée linéairement sur le pied de valve (1a) dans la direction du trou oblong (4).

2. Système de contrôle de la pression d'un pneumatique selon la revendication 1, **caractérisé par le fait qu'**une ligne de coupe imaginaire de la surface d'appui (3e) avec un plan de coupe imaginaire passant parallèlement au trou oblong (4) est une droite.

3. Système de contrôle de la pression d'un pneumatique selon l'une des revendications précédentes, **caractérisé par le fait que** la surface d'appui (3e) est plate.

4. Système de contrôle de la pression d'un pneumatique selon l'une des revendications précédentes, **caractérisé par le fait que** la valve de pneumatique (1) possède une vis creuse (1b) qui s'engage dans le pied de valve (1a) et fait saillie au travers du trou oblong (4).

5. Système de contrôle de la pression d'un pneumatique selon l'une des revendications précédentes, **caractérisé par le fait que** la surface d'appui (3e) de l'électronique de roue (3) repose sur une surface porteuse du pied de valve (1a) qui, dans l'état monté, est orienté en biais par rapport à la face inférieure du boîtier (3a) de l'électronique de roue (3).

6. Système de contrôle de la pression d'un pneumatique selon la revendication 5, **caractérisé par le fait que**, dans l'état monté, une ligne de coupe imaginaire de la surface porteuse avec un plan de coupe imaginaire passant parallèlement au trou oblong (4) est une droite.

7. Système de contrôle de la pression d'un pneumatique selon l'une des revendications 5 ou 6, **caractérisé par le fait que** la surface porteuse est plane.

8. Système de contrôle de la pression d'un pneumatique selon l'une des revendications précédentes, **caractérisé par le fait que** les éléments formant embase (3d) prennent la forme de nervures.

9. Système de contrôle de la pression d'un pneumatique selon l'une des revendications précédentes, **caractérisé par le fait que** les éléments formant embase (3d) s'étendent le long de grands côtés opposés du boîtier (3a).

10. Système de contrôle de la pression d'un pneumatique selon l'une des revendications précédentes, **caractérisé par le fait que** le trou oblong (4) est disposé dans une partie de la face postérieure du boîtier prenant la forme d'une plaque.

11. Système de contrôle de la pression d'un pneumatique selon l'une des revendications précédentes, **caractérisé par le fait que** la surface d'appui (3e) est en biais par rapport à la face postérieure du boîtier.

12. Roue avec une base de jante et un système de contrôle de la pression du pneumatique selon l'une des revendications précédentes, **caractérisée par le fait que** les éléments formant embase (3d) de l'électronique de roue reposent sur la base de jante (2a) par un segment qui s'étend le long des grands côtés du boîtier (3a).

13. Électronique de roue comportant un boîtier (3a) dans lequel sont disposés un appareil de mesure de pression (3b) et un dispositif émetteur (3c), le boîtier (3a) possédant, sur une face inférieure, deux éléments formant embase (3d) pour la pose sur la base de la jante (2a) d'une roue et, sur une face postérieure, une surface d'appui (3e) avec un trou oblong (4) pour reposer sur le pied de valve (1a) d'une valve de pneumatique (1), **caractérisée par le fait que** la surface d'appui (3e) est plane.
